# EUROPÄISCHE PATENTSCHRIFT

(11) **EP 3 978 392 B1**
(45) Veröffentlichungstag und Bekanntmachung des Hinweises auf die Patenterteilung: **30.09.2026**
(21) Anmeldenummer: 21201007.8
(22) Anmeldetag: 05.10.2021
(51) Int. Cl.: B65D 88/54, B65D 88/02, B65D 88/12, B65D 90/00, B65D 90/18, B60P 3/12

(54) **BEHÄLTER ZUM AUFNEHMEN HAVARIERTER FAHRZEUGE, BEHÄLTERANORDNUNG UND VERFAHREN ZUM BERGEN EINES HAVARIERTEN FAHRZEUGES DAMIT**
CONTAINER FOR SALVAGING DAMAGED VEHICLES, CONTAINER ARRANGEMENT AND METHOD FOR SALVAGING A DAMAGED VEHICLE THEREWITH
CONTENEUR POUR LA RÉCUPÉRATION DE VÉHICULES ACCIDENTÉS, ENSEMBLE DE CONTENEURS ET PROCÉDÉ DE RÉCUPÉRATION D'UN VÉHICULE ACCIDENTÉ AVEC UN TEL CONTENEUR

(30) Priorität: 05.10.2020 DE 102020125991
(43) Veröffentlichungstag der Anmeldung: 06.04.2022
(73) Patentinhaber: Ellermann Eurocon GmbH, 27751 Delmenhorst (DE)
(72) Erfinder: Ellermann, Wenzeslaus, 27755 Delmenhorst (DE)
(74) Vertreter: Eisenführ Speiser

(56) Entgegenhaltungen:
- EP-A1- 3 263 402
- CN-U- 207 328 242
- DE-U1- 202019 104 363
- DE-U1- 202019 104 504
- DE-U1- 202020 101 186
- US-A- 5 509 639

## Beschreibung

Die Erfindung betrifft einen Behälter, insbesondere einen Stapelbehälter, zum Aufnehmen havarierter Fahrzeuge, insbesondere havarierter Elektrofahrzeuge, wobei der Behälter einen Aufnahmebereich für das Fahrzeug, und wenigstens eine den Aufnahmebereich begrenzende Stirnwand aufweist. Ferner betrifft die Erfindung eine Behälteranordnung mit einer Anzahl solcher Behälter sowie ein Verfahren zum Bergen eines solchen havarierten Fahrzeuges unter Verwendung eines solchen Behälters .

Behälter der eingangs bezeichneten Art sind beispielsweise aus EP 3 263 402 B1 bekannt. Solche Behälter sind dazu eingerichtet, havarierte Fahrzeuge mittels einer Winde in einen Aufnahmebereich des Behälters zu verbringen. Innerhalb des Aufnahmebereiches kann dann nach dem gegebenenfalls zuvor erfolgten Verschließen des Aufnahmebereiches eine kontrollierte Versorgung mit Kühl- und/oder Löschmitteln vorgenommen werden. Speziell bei havarierten Fahrzeugen mit elektrischen Speicherzellen kann so einem sogenannten thermischen Durchgehen ("thermal runaway") zuverlässig entgegengewirkt werden. Solche Behälter können in gleicher Weise auch zum Bergen havarierter Fahrzeuge mit Verbrennungsmotor oder anderen Antriebsarten eingesetzt werden.

Aufgrund der Gefahr einer Entzündung oder Wiederentzündung der havarierten Fahrzeuge, insbesondere Elektrofahrzeuge, kann die Zwischenlagerung solch havarierter Fahrzeuge eine bestimmte Zeitdauer von mehreren Tagen bis hin zu Wochen in Anspruch nehmen. In dieser Zeit kann der Behälter nicht weiter verwendet werden kann. Dementsprechend ist es von Vorteil, wenn Hersteller, Verkäufer, Einsatzkräfte sowie Transportunternehmen und Verwerter von solchen Fahrzeugen, welche mit hoher Wahrscheinlichkeit mit havarierten Fahrzeugen in Kontakt gelangen, angepasst an die Anzahl sich in der jeweiligen Obhut befindlichen Fahrzeuge mehrere solcher Behälter vorrätig halten. Nur dadurch kann strenggenommen gewährleistet werden, dass im Ernstfall stets ein aufnahmebereiter Behälter zur Verfügung steht.

Die aus dem Stand der Technik bekannten Bergungs- bzw. Havarie-Behälter treffen in der Praxis im Zuge der fortschreitenden Elektrifizierung des Straßenverkehrs auf zunehmenden Bedarf, ihr Platzbedarf bei der Bevorratung und die Investitionskosten stellen aber gerade für Unternehmen, die eine größere Anzahl solcher Behälters benötigen, eine Herausforderung dar.

DE 20 2019 104 504 U1 betrifft einen Behälter zum Aufnehmen von Gefahrgütern. Der Behälter weist einen Aufnahmebereich für ein Fahrzeug und wenigstens eine den Aufnahmebereich begrenzende Stirnwand auf. An der Stirnwand ist innenseitig eine Seilwinde dauerhaft fest montiert.

US 5,509,639 A zeigt eine Windenanordnung, die an verschiedenen Strukturen eines Fahrzeugs anbringbar und abnehmbar ist. In einer Ausführung wird die Windenanordnung mittels einer L-förmigen Halterung an einer senkrechten Stirnwand der Ladefläche des Fahrzeugs montiert.

Der Erfindung lag die Aufgabe zugrunde, einen Behälter der eingangs bezeichneten Gattung dahingehend weiterzuentwickeln, dass die vorstehend beschriebenen Nachteile soweit wie möglich überwunden werden können. Insbesondere lag der Erfindung die Aufgabe zugrunde, einen Behälter anzugeben, der mit geringerem Platzbedarf bevorratet werden kann und wirtschaftlich herstell- und anschaffbar ist.

Die Erfindung löst die ihr zugrundeliegende Aufgabe bei einem Behälter der vorbezeichneten Gattung, indem an der Stirnwand eine Montage-Schnittstelle angeordnet ist, und eine Zugeinrichtung, welche eine Montage-Schnittstelle aufweist, die korrespondierend zur Montage-Schnittstelle am Behälter ausgebildet ist, zum Verbringen des Fahrzeuges in den Behälter mit der Montage-Schnittstelle reversibel lösbar gekoppelt ist, und wobei der Behälter ferner einen Haken zum Bewegen des Behälters aufweist, der in einem Abschnitt der Stirnwand angeordnet ist, und wobei die Montage-Schnittstelle für die Zugeinrichtung in demselben Abschnitt der Stirnwand angeordnet ist.

Die Erfindung macht sich hierbei die Erkenntnis zunutze, dass eine Zugeinrichtung, wenn ein Fahrzeug in den Aufnahmebereich des Behälters zu verbringen ist, mithilfe einer Montage-Schnittstelle einfach an einer Stirnwand des erfindungsgemäßen Behälters montiert und nach erfolgtem Verbringen des Fahrzeuges in den Aufnahmebereich auch wieder einfach von der Montage-Schnittstelle am Behälter demontiert werden kann. Die Zugeinrichtung muss nicht mehr, wie noch im Stand der Technik üblich, dauerhaft an dem Behälter verbleiben.

Zum einen ergibt sich dadurch eine verbesserte Stapelbarkeit des Behälters, da die Zugeinrichtung als fest verbautes Ausrüstungsteil eines solchen Behälters nicht mehr dauerhaft in den Aufnahmebereich des Behälters vorsteht. Zum anderen werden die Kosten für Anschaffung und Herstellung eines solchen Behälters und vor allem einer Vielzahl von Behältern deutlich reduziert, da nun nicht mehr für jeden Behälter eine Zugeinrichtung fest zugeordnet oder bereitgestellt werden muss, sondern eine geringere Anzahl Zugeinrichtungen vorgehalten werden kann, als Behälter vorgehalten werden. Damit kann im Bedarfsfall ein Behälter über die Montage-Schnittstelle mit einer Zugeinrichtung reversibel lösbar gekoppelt werden.

Die Behälter sind vorzugsweise als Stapelbehälter ausgebildet. Unbenutzte oder freie Behälter können somit ineinander gestapelt werden, was deren Platzbedarf signifikant reduziert. Die Erfindung spielt ihren Vorteil in besonderem Maße bei diesen Stapelbehältern aus. Durch die Lösung, den Behälter bei Nichtgebrauch übereinander und/oder ineinander stapeln zu können, ergibt sich eine große mögliche Platzersparnis. Diesen Vorteil spielt das System dann aber auch beim Transport aus, denn es können mehrere Stapelbehälter zeitgleich von ein und demselben Fahrzeug zum Einsatzort verbracht werden. Der Rationalisierungsfaktor ist dadurch sehr hoch.

Gemäß einer bevorzugten Ausgestaltung des erfindungsgemäßen Behälters ist die Stirnwand eine erste Stirnwand, und der Behälter weist eine der ersten Stirnwand gegenüberliegend angeordnete zweite Stirnwand auf, wobei der zweiten Stirnwand eine Behälteröffnung zugeordnet ist. Die zweite Stirnwand, welche am Behälter vorzugsweise zur ersten Stirnwand am gegenüberliegenden Ende des Behälters angeordnet ist, begrenzt vorzugsweise zusammen mit der ersten Stirnwand den Aufnahmebereich des Behälters in seine Längsrichtung. Die erste Stirnwand ist beispielsweise die Vorderwand, und die zweite Stirnwand ist vorzugsweise die Hinterwand. Die Behälteröffnung vereinfacht das Verbringen eines havarierten Fahrzeuges in den Aufnahmebereich des Behälters.

Der Aufnahmebereich ist vorzugsweise unten wie auch seitlich durch Behälterboden und Seitenwände geschlossen. Der erfindungsgemäße Behälter weist somit vorzugsweise zumindest einen Behälterboden und mehrere sich im Winkel zum Behälterboden erstreckende Stirn- und Seitenwände auf. Mithilfe des Behälterbodens und der Stirn- und Seitenwände kann ein an fünf Seiten geschlossener Behälter ausgebildet werden, dessen Oberseite des Behälters derart offen bleibt, dass die Stapelbarkeit des Behälters gewährleistet ist.

Erfindungsgemäß weist der Behälter einen Haken zum Bewegen des Behälters auf, insbesondere zum Anheben bzw. Absetzen des Behälters, der in einem Abschnitt der Stirnwand angeordnet ist, und wobei die Montage-Schnittstelle für die Zugeinrichtung in demselben Abschnitt der Stirnwand angeordnet ist wie der Haken des Behälters. Vorzugsweise sind der Haken und die Montage-Schnittstelle für die Zugeinrichtung so an der Stirnwand des Behälters angeordnet, dass der Aufnahmebereich des Behälters nicht beeinträchtigt ist. Der Haken und die Montage-Schnittstelle stehen somit nicht nach innen in den Behälter vor, was die Stapelbarkeit des erfindungsgemäß ausgebildeten Behälters weiter verbessert. Ferner ist nur ein Bereich an der ersten Stirnwand des Behälters zur Krafteinleitung durch den Haken und die Zugeinrichtung zu verstärken. Vorzugsweise sind der Haken und die Montage-Schnittstelle in der oberen Behälterhälfte, weiter vorzugsweise im Bereich der Oberseite der ersten Stirnwand, angeordnet, was das Greifen des Hakens durch zum Beispiel eine Hebeeinrichtung eines Fahrzeuges wie auch die Montage und Demontage der Zugeinrichtung vereinfacht.

Erfindungsgemäß weist der Behälter eine Hakenaufnahme auf, an welcher der Haken reversibel lösbar montiert ist, wobei die Montage-Schnittstelle weiter vorzugsweise einstückig mit der Hakenaufnahme ausgebildet ist. Mit der reversibel lösbaren Montage des Hakens an der Hakenaufnahme wird gewährleistet, dass der Haken nur bei Bedarf, beispielsweise zum Verladen des Behälters, in der Hakenaufnahme befestigt werden kann. Bei Nichtverwendung des Behälters, wie beispielsweise dessen Lagerung, kann der Haken an der Hakenaufnahme dann partiell oder vollständig gelöst werden. In einer bevorzugten Ausführungsform der Erfindung sind die Hakenaufnahme und die Montage-Schnittstelle für die Zugeinrichtung vorzugsweise mittels eines Bauteils an der ersten Stirnwand des Behälters ausgebildet. Damit ist ein kompakter und vor allem stabiler Krafteinleitungspunkt am Behälter erzeugt.

Gemäß der Erfindung ist die Montage-Schnittstelle Teil der Hakenaufnahme. Damit ist eine kompaktere Ausgestaltung der Hakenaufnahme und der Montageschnittstelle für die Zugeinrichtung erreicht, in welcher der Haken in dieser Ausführungsform zunächst von der Hakenaufnahme zumindest partiell zu lösen ist, um dann an der freigegebenen Montage-Schnittstelle die Zugeinrichtung montieren zu können. Die am Behälter zu montierende Zugeinrichtung wird insbesondere in Bereichen der Hakenaufnahme angeordnet, in denen sonst der am Behälter reversibel lösbar montierbaren Haken angeordnet ist, so dass sich der Haken und die Zugeinrichtung mit anderen Worten Bereiche der Hakenaufnahme teilen.

Der Haken und die Zugeinrichtung weisen vorzugsweise korrespondierende Befestigungsmittel auf, die dazu eingerichtet sind, das jeweilige Bauteil - also den Haken oder die Zugeinrichtung - in der Hakenaufnahme zu befestigen, wobei die Befestigungsmittel vorzugsweise reversibel lösbar mit den jeweiligen Bauteilen gekoppelt werden.

Gemäß der Erfindung ist ferner vorgesehen, dass der Haken als Klapphaken ausgebildet ist, wobei der Haken an der Hakenaufnahme zwischen einer Arbeitsstellung und einer Ruhestellung hin- und herbewegbar und in der Arbeitsstellung arretierbar ist. Die Ausgestaltung des Hakens als Klapphaken ermöglicht, den Haken nur partiell aus der Hakenaufnahme zu entfernen, und dabei die Montage-Schnittstelle freizugeben, so dass die Zugeinrichtung mit der Montage-Schnittstelle verbunden werden kann. Gleichzeitig kann der Haken dauerhaft am Behälter verbleiben, und ist gewissermaßen verliersicher aufbewahrt.

Vorzugsweise ist der Haken an der Hakenaufnahme schwenkbar befestigt, wie etwa mittels eines Schwenklagers. Der Haken kann vorzugsweise von Hand aus seiner Arbeitsstellung, in der ein Verladen des Behälters möglich ist, in seine Ruhestellung bewegt werden. In der Ruhestellung hat der Haken vorzugsweise eine von der Oberkante der ersten Stirnwand aus nach unten, vorzugsweise senkrecht, weisende Ausrichtung. Weiter vorzugsweise wird der Klapphaken nur in der Arbeitsstellung arretiert, wobei der Haken insbesondere mit zwei etwa parallel zueinander verlaufenden Plattenteilen mittels wenigstens eines oder mehrerer Bolzen als Befestigungsmittel in entsprechenden Aufnahmen an der Hakenaufnahme befestigt wird.

Erfindungsgemäß ist die Montage-Schnittstelle dazu eingerichtet, den Haken zu arretieren, wenn sich der Haken in der Arbeitsstellung befindet, und die Zugeinrichtung aufzunehmen, wenn sich der Haken in seiner Ruhestellung befindet. Dadurch können sowohl der Haken als auch die Zugeinrichtung mit deutlich verringertem Platzbedarf an dem erfindungsgemäßen Behälter angeordnet werden. Die Hakenaufnahme, welche in der Ruhestellung des Hakens als Montage-Schnittstelle für die Zugeinrichtung fungiert, erfüllt somit eine Doppelfunktion am erfindungsgemäßen Behälter. Mit der aufgezeigten konstruktiven Ausgestaltung ist eine erhöhte Funktionalität des erfindungsgemäß ausgebildeten Behälters erreicht.

Vorzugsweise weist die Hakenaufnahme/Montage-Schnittstelle am Behälter ein oder mehrere Befestigungselemente auf, wie z.B. Lagerbolzen, die mit Aufnahmen an der Hakenaufnahme/Montage-Schnittstelle zum Fixieren des Hakens oder der Zugeinrichtung korrespondieren.

In einer nicht erfindungsgemäßen Ausgestaltung des Behälters ist, anstelle einer kombinierten Hakenaufnahme und Montage-Schnittstelle für die Zugeinrichtung, eine zum Haken separate Montage-Schnittstelle für die Zugeinrichtung am Behälter vorgesehen, die zwei jeweils an einem Ende der Stirnwand des Behälters angeordnete Eckbeschläge aufweist, wobei die Zugeinrichtung dazu korrespondierende Rastelemente aufweist, die dazu eingerichtet sind, reversibel lösbar mit den Eckbeschlägen des Behälters verrastet zu werden.

Statt die Zugeinrichtung mit der Hakenaufnahme des Behälters reversibel zu koppeln, wird die Zugeinrichtung über separate Aufnahmen am Behälter befestigt. Mittels der Eckbeschläge als Aufnahmen für die damit koppelbare Zugeinrichtung kann unter Verwendung der Eckbeschläge des Behälters eine stabile Verbindung der Zugeinrichtung mit dem Behälter bewirkt, in die die Rastelemente der Zugeinrichtung einfach eingehängt werden. Auch die Eckbeschläge können multifunktional sein, und beispielsweise neben der Aufnahme der Zugeinrichtung noch anderen Verwendungszwecken dienen, etwa der Befestigung gestapelter Behälter aneinander mittels Twistlocks und dergleichen.

Die Zugeinrichtung weist vorzugsweise eine mit den Eckbeschlägen am Behälter koppelbare Traverse auf. Eine solche Traverse erstreckt sich vorzugsweise über die gesamte Länge an der Oberseite der ersten Stirnwand und ist mit ihren einander gegenüberliegenden Enden jeweils in einen der Eckbeschläge am Behälter einsetzbar und arretierbar. An den Enden der Traverse sind entsprechende Rastelemente angeordnet, die in die Eckbeschläge am Behälter eingreifen. In einer möglichen Ausgestaltung ist die Zugeinrichtung reversibel an der Traverse montierbar ausgebildet. Im Bedarfsfall kann die Zugeinrichtung selbst an der Traverse demontiert werden. Vorzugsweise weist die Traverse Steckaufnahmen für die daran montierbare Zugeinrichtung auf.

Gemäß einer bevorzugten Weiterbildung des erfindungsgemäßen Behälters ist die an der zweiten Stirnwand des Behälters vorgesehene Behälteröffnung mittels einer horizontal schwenkbar gelagerten Klappe oder mittels eines oder zwei vertikal schwenkbar gelagerten Türelementen verschließbar. Damit ist ein verschließbarer Aufnahmebereich ausgebildet, in den insbesondere bei einem im Aufnahmebereich befindlichen havarierten Fahrzeug Kühl- und/oder Löschmittel eingebracht werden können.

In einer bevorzugten Ausführungsform ist die Klappe pendelbar und/oder klappbar an dem Behälter angeordnet. Eine pendelbar ausgeführte Klappe wird auch als Pendelklappe bezeichnet und ist derart schwenkbar am Behälter angeordnet, dass der Schwenkpunkt der Klappe vom Behälterboden beabstandet ist, wobei die Pendelklappe bei einem Öffnungsvorgang vom Behälterboden wegschwenkt, gewissermaßen nach oben hin. Dadurch kann der erfindungsgemäße Behälter auch zum Transport von Schüttgut verwendet werden, weil das Schüttgut mittels der Pendelklappe einfach durch Kippen des Behälters entfernt werden kann. In den Ausführungsformen, in denen die Klappe sowohl pendel- als auch klappbar ausgeführt ist, weist der Behälter vorzugsweise eine Klappenmechanik mit einer ersten Schwenkachse zum Klappen und einer zweiten Schwenkachse zum Pendeln auf, wobei für die jeweils auszuführende Funktion eine der Schwenkachsen entkoppelt werden kann, während die andere Achse die jeweils gewünschte Schwenkfunktion ausführt. Die Schwenkachsen können einteilig oder mehrteilig mit entsprechend angeordneten Achszapfen ausgebildet sein.

Vorzugsweise weisen die die Behälteröffnung definierenden Wandbereiche bzw. die die Behälteröffnung verschließende Klappe oder das Türelement ein oder mehrere Dichtelemente auf, mittels derer vorzugsweise eine fluiddichte Abdichtung im Bereich der Behälteröffnung erreicht ist.

Gemäß einer bevorzugten Weiterbildung des erfindungsgemäßen Behälters sind im Aufnahmebereich am Behälterboden und/oder den Seitenwänden ein oder mehrere Zurrösen und/oder an der Außenseite der Seitenwände mehrere Anschlagösen vorgesehen. Mithilfe der Zurrösen erfolgt insbesondere eine Ladungssicherung des im Aufnahmebereich des Behälters angeordneten Fahrzeuges während des Abtransports.

Die Ladungssicherung des Fahrzeuges selbst wird vorzugsweise mithilfe von Spannmitteln vorgenommen, wie beispielsweise Spanngurten oder dergleichen, die vorzugsweise quer zwischen den seitlichen Seitenwänden des Behälters gespannt bzw. gezogen werden. Die Anschlagösen an den Außenseiten des Behälters dienen vorzugsweise zum Verladen des Behälters. Unter dem Begriff Seitenwände sind vorliegend die Seitenwände des Behälters zu verstehen, welche im Wesentlichen quer zu den Stirnwänden verlaufen und insbesondere parallel zur Längsachse des erfindungsgemäßen Behälters ausgerichtet sind. Vorzugsweise begrenzen die Seitenwände die Abmessungen des Behälters in der Breite. Die Stirnwände begrenzen den Behälter hingegen in seiner Länge.

Eine weitere bevorzugte Ausgestaltung des Behälters sieht vor, dass an dem Behälter eine Anzahl von Anschlüssen zum Einleiten und/oder Abführen von Kühl- bzw. Löschfluid in den Aufnahmebereich angeordnet sind, wobei vorzugsweise einer, mehrere oder sämtliche der Anschlüsse eine Schlauchkupplung, vorzugsweise eine Storz-Kupplung zum Anschließen eines Anschlusses eines Fluidschlauches aufweist. Mithilfe der Anschlüsse am Behälter kann insbesondere nach dem Verbringen des havarierten Fahrzeuges in den Aufnahmebereich und dem bevorzugten Verschließen der Behälteröffnung am Behälter Kühl-bzw. Löschfluid, wie beispielsweise Wasser, in den Aufnahmebereich des Behälters eingeleitet werden.

Vorzugsweise sind die Anschlüsse zum Einleiten von Kühl- bzw. Löschfluid in einem Abstand zum Boden des Behälters, beispielsweise von etwa 1 m, angeordnet. Die Anschlüsse zum Abführen des Kühl- bzw. Löschfluids aus dem Aufnahmebereich sind im Nahbereich des Behälterbodens angeordnet, wodurch das Abführen des Fluids aus dem Aufnahmebereich erleichtert wird.

Vorzugsweise sind die Anschlüsse zum Einleiten und/oder Abführen des Fluids in und aus dem Aufnahmebereich des Behälters jeweils mit einer Storz-Kupplung nach DIN 14323:1985-04 ausgebildet. An solchen Storz-Kupplungen können die üblicherweise von Einsatzkräften verwendeten Löschschläuche einfach angeschlossen werden.

Vorzugsweise weist der Behälterboden einen im Vergleich zum übrigen Behälterboden vertieft ausgebildeten Auffangbereich zum Sammeln und Abführen von in dem Aufnahmebereich eingeführtem Kühl- bzw. Löschfluid auf. Damit ist das Abführen eines in den Aufnahmebereich eingeleiteten Kühl- bzw. Löschfluids vereinfacht. Vorzugsweise ist mit dem vertieft ausgebildeten Auffangbereich eine Abführleitung fluidleitend gekoppelt, über die das Kühl- bzw. Löschfluid etwa nahezu vollständig aus dem Aufnahmebereich des Behälters abgesaugt werden kann. Der Auffangbereich ist vorzugsweise im Behälterboden im Nahbereich der ersten Stirnwand ausgebildet, so dass dieser das Verbringen eines havarierten Fahrzeuges in den Aufnahmebereich des Behälters nicht behindert.

Gemäß einer bevorzugten Ausgestaltung ist der Behälter, insbesondere wie oben beschrieben, als Stapelbehälter ausgebildet. Dadurch kann ein weiterer Behälter über die offene Oberseite in den Behälter eingesetzt werden, wobei der Behälterboden des eingesetzten Behälters im Aufnahmebereich des darunter angeordneten Behälters aufgenommen ist.

Vorzugsweise sind die Stirn- und Seitenwände des Stapelbehälters zum Behälterboden in einem Winkel ungleich 90° ausgerichtet. Vorzugsweise verlaufen die Seitenwände des Behälters trichterförmig zueinander, das heißt, der Querschnitt des Aufnahmebereiches verjüngt sich von der Oberseite des Behälters in Richtung seines Behälterbodens. Damit ist die Stapelbarkeit der Behälter weiter verbessert. Vorzugsweise werden als Stapelbehälter Container nach DIN 30722-1, DIN 30722-2 und DIN 30722-3, entsprechend Feuerwehr-Norm DIN 14505, verwendet.

Vorzugsweise sind in einer möglichen Ausführungsform des Behälters unterhalb des Behälterbodens von der Längsseite des Behälters aus zugängliche Staplertaschen ausgebildet. Ein entsprechend mit Staplertaschen ausgerüsteter Behälter kann vorzugsweise von seiner Längsseite aus mithilfe eines Staplers untergriffen werden und, sofern das Flurförderfahrzeug dazu eingerichtet ist, der Behälter gegebenenfalls zusammen mit einem im Aufnahmebereich havarierten Fahrzeug angehoben und auf einer Ladefläche eines Fahrzeuges verladen werden.

Gemäß einer bevorzugten Ausgestaltung weist der Behälter an seiner Behälterunterseite eine oder mehrere, vorzugsweise mindestens zwei, Rollen zum Bewegen des Behälters auf, wobei die Rollen vorzugsweise klapp- oder schwenkbar an der Behälterunterseite ausgebildet und zwischen einer Arbeits- und einer Ruhestellung reversibel hin- und herbewegbar sind. Ein solcher mit Rollen ausgerüsteter Behälter kann mithilfe seines Hakens im Bedarfsfall über die Aufstellfläche bewegt werden und beispielsweise mit einem Abschleppfahrzeug aufgenommen werden.

Vorzugsweise sind zumindest zwei Rollen an dem Ende des Behälters angeordnet, dass dem Behälterhaken gegenüberliegt. Die Rollen sind somit vorzugsweise an dem Ende angeordnet, an dem die Behälteröffnung zum Überführen des Fahrzeuges in den Aufnahmebereich ausgebildet ist. In einer Ausführungsform der Erfindung sind an jedem stirnseitigen Ende des Behälters jeweils zwei Rollen angeordnet.

Vorzugsweise können die Rollen an der Unterseite des Behälters derart verschwenkt werden, dass diese in ihrer Ruhestellung nicht über die Außenabmessungen des als Stapelbehälter ausgebildeten Behälters hervorstehen. Damit ist dessen Stapelbarkeit und ferner die Verlade- und Transportfähigkeit des erfindungsgemäßen Behälters auf den weiteren verschiedenen gängigen Transportwegen nicht beeinträchtigt.

Eine mögliche Weiterbildung des Behälters sieht eine Abdeckung vor, welche dazu eingerichtet ist, den Aufnahmebereich am Behälter entlang der Oberseite des Behälters zumindest abschnittsweise zu verschließen. Mithilfe der Abdeckung, beispielsweise einer an der Oberseite des Behälters anordenbaren, vorzugsweise schwer entflammbaren (s.u.), Abdeckplane bzw. eines an der Oberseite des Behälters angeordneten Daches, vorzugsweise eines Faltdaches, ist ein Verschluss des Aufnahmebereiches an der Oberseite des Behälters möglich. Damit soll einem ungehinderten Austritt von Rauchgasen aus dem Aufnahmebereich des Behälters entgegengewirkt werden.

Die Abdeckung wird vorzugsweise zumindest entlang der Oberseite von wenigstens zwei einander gegenüberliegender Stirn- oder Seitenwände des Behälters angeordnet. Vorzugsweise ist die Abdeckung schwer entflammbar und zum Transport von Gefahrgütern eingerichtet, beispielsweise nach Klasse B1 gemäß DIN 4102-1:1998-05 oder einer der Klassen A1 bis C gemäß EN 13501-1:2019-05.

Ferner ist eine Zugeinrichtung zum Verbringen von havarierten Fahrzeugen in einen Behälter zum Aufnehmen solcher Fahrzeuge, mit zumindest einer Antriebseinheit, und einem mit der Antriebseinheit wirkverbundenen Zugmitteln, vorzugsweise einem Seil, Riemen oder einer Kette offenbart.

Die Zugeinrichtung weist eine Montage-Schnittstelle auf, die dazu eingerichtet ist, reversibel lösbar an einer korrespondierend ausgebildeten Montage-Schnittstelle eines Behälters gemäß einem der oben beschriebenen bevorzugten Ausführungsformen montiert zu werden. Mithilfe der Montage-Schnittstelle kann die Zugeinrichtung sehr einfach und vor allem reversibel lösbar an dem Behälter montiert und nach erfolgtem Einsatz auch wieder demontiert werden. Ein dauerhafter Verbleib der Zugeinrichtung an dem Behälter, die im Vergleich zur gesamten Einsatzzeit des Behälters nur selten Verwendung findet, ist damit nicht notwendig. Die Zugeinrichtung kann stets bedarfsgerecht eingesetzt werden. Eine solch ausgebildete Zugeinrichtung kann zudem an mehreren Behältern im jeweiligen Bedarfsfall genutzt und für das Überführen eines havarierten Fahrzeuges in den Aufnahmeraum eines korrespondierend ausgebildeten Behälters verwendet werden. Damit können die Kosten für einen Behälter, an dem die Zugeinrichtung montierbar ist, verringert werden.

Gemäß einer Ausgestaltung weist die Montage-Schnittstelle der Zugeinrichtung einen Grundkörper auf, an dem die Antriebseinheit befestigt ist, und mit einem oder mehreren Befestigungselementen, vorzugsweise ein oder mehrere Bolzen, zum reversiblen Koppeln mit der Montage-Schnittstelle am Behälter, in Eingriff bringbar ist. Mithilfe des Grundkörpers erfolgt vorzugsweise die Ausrichtung bzw. Positionierung der Zugeinrichtung innerhalb des Aufnahmebereiches des Behälters. Vorzugsweise weist der Grundkörper ein oder mehrere Stützabschnitte auf, die, wenn die Zugeinrichtung montiert ist, vorzugsweise mit einer dem Aufnahmebereich zugewandten Innenseite der ersten Stirnwand in Anlage gebracht sind.

Am Grundkörper sind vorzugsweise ein oder mehrere Aufnahmen für die Befestigungselemente vorgesehen, beispielsweise Ausnehmungen oder Durchbrüche im Grundkörper, in die die Bolzen eingesetzt werden, welche zudem mit entsprechenden Aufnahmen an der Montage-Schnittstelle des Behälters korrespondieren. Vorzugsweise fluchten in der Montageposition der Zugeinrichtung am Behälter die Ausnehmungen an der Montage-Schnittstelle der Zugeinrichtung mit korrespondierend ausgebildeten Ausnehmungen an der Montage-Schnittstelle des Behälters. Vorzugsweise wird das oder werden die Befestigungselemente nach dem Koppeln der Montage-Schnittstelle der Zugeinrichtung mit der Montage-Schnittstelle am Behälter über separate Sicherungselemente arretiert.

In einer alternativen Ausgestaltung der Erfindung weist die Montage-Schnittstelle am Behälter ein oder mehrere Hakenteile auf, in die ein oder mehrere an der Montage-Schnittstelle der Zugeinrichtung fest angeordnete Rastelemente eingehängt werden.

Gemäß einer bevorzugten Weiterbildung der Zugeinrichtung ist die Montage-Schnittstelle als eine sich entlang der Stirnwand des Behälters erstreckende Traverse mit jeweils einem Rastelement an den Enden der Traverse ausgebildet und vorzugsweise dazu eingerichtet, mit jeweils einem an einem Ende der Stirnwand des Behälters angeordneten Eckbeschlag in Eingriff gebracht zu werden. Eine solche Traverse umfasst vorzugsweise einen stabartigen Grundkörper, der vorzugsweise einteilig ausgebildet ist und eine Länge aufweist, die etwa im Wesentlichen der Länge der Stirnseite an ihrem oberen Ende entspricht. An den einander gegenüberliegenden Enden des stabartigen Grundkörpers sind Rastelemente vorgesehen, die vorzugsweise jeweils mit einem Eckbeschlag in den Eckbereichen des Behälters verrastet werden können.

Gemäß einer bevorzugten Ausgestaltung ist die Zugeinrichtung als eine Winde, insbesondere eine Seilwinde ausgebildet, mit der zum Beispiel ein havariertes Fahrzeug in den Aufnahmebereich des Behälters verbracht werden kann. Die Winde stellt eine vorteilhafte Ausgestaltung einer Zugeinrichtung zum Bewegen eines Gegenstandes, insbesondere eines Fahrzeuges dar. In einer bevorzugten Ausführungsform weist die zum Einsatz kommende Winde zum Schutz ihrer elektrischen Bauteile eine Schutzart von mindestens IP68 (gemäß DIN EN 60529) oder höher auf.

Gemäß einem weiteren Aspekt betrifft die Erfindung eine Behälteranordnung mit einer ersten Anzahl von Behältern, insbesondere Stapelbehältern zum Aufnehmen havarierter Fahrzeuge, jeweils mit einem Aufnahmebereich für das Fahrzeug, und wenigstens einer den Aufnahmebereich zu begrenzenden Stirnwand, wobei an der Stirnwand jeweils eine Montage-Schnittstelle zum reversibel lösbaren Koppeln mit einer Zugeinrichtung zum Verbringen des Fahrzeuges in den Behälter angeordnet ist, und einer zweiten Anzahl von Zugeinrichtungen zum Verbringen des Fahrzeuges in den Behälter, wobei die Zugeinrichtung eine Montage-Schnittstelle aufweist, die zu der Montage-Schnittstelle korrespondierend ausgebildet und dazu eingerichtet ist, reversibel lösbar an der Montage-Schnittstelle des Behälters montiert zu werden, und wobei die zweite Anzahl an Zugeinrichtungen geringer ist als die erste Anzahl an Behältern. Erfindungsgemäß wird hier der Ansatz verfolgt, dass ein erfindungsgemäßer Behälter der Behälteranordnung nicht mehr eine Zugeinrichtung als festes Ausrüstungsteil umfasst, sondern eine Zugeinrichtung mit ihrer Montage-Schnittstelle nur im Bedarfsfall am Behälter montiert wird und nach entsprechender Verwendung dann wieder am Behälter demontiert wird. Mehrere Behälterteilen sich somit eine Zugeinrichtung. Da die Zugeinrichtung nicht dauerhaft an der Innenseite der ersten Stirnwand in den Aufnahmebereich des Behälters angeordnet ist, erhöhen sich die Flexibilität und die Einsatzmöglichkeiten der erfindungsgemäßen Behälter. Zudem können die Gesamtkosten für einen solchen Behälter verringert werden.

Erfindungsgemäß sind die Behälter der Behälteranordnung gemäß der oben beschriebenen Ausführungsform nach Anspruch 1 ausgebildet.

Gemäß einem weiteren Aspekt betrifft die Erfindung ein Verfahren zum Bergen eines havarierten Fahrzeuges unter Verwendung eines stapelbaren Behälters nach einer der vorstehend bevorzugten Ausführungsformen.

Das erfindungsgemäße Verfahren umfasst die Schritte: Bereitstellen eines Behälters mit einer Montage-Schnittstelle für eine Zugeinrichtung; Bereitstellen einer Zugeinrichtung, die eine zur Montage-Schnittstelle des Behälters korrespondierende Montage-Schnittstelle umfasst; Koppeln der Montage-Schnittstelle der Zugeinrichtung mit der Montage-Schnittstelle des Behälters; Verbringen des havarierten Fahrzeuges in einen Aufnahmebereich des Behälters mittels der Zugeinrichtung, und Verschließen des Aufnahmebereiches sowie vorzugsweise Einfüllen von Kühl- bzw. Löschmittel, insbesondere Löschwasser, in den Aufnahmebereich des Behälters. Anstelle einer fest am Behälter montierten Zugeinrichtung kann eine separate Zugeinrichtung verwendet werden, welche gemäß dem erfindungsgemäßen Verfahren vor dem Verbringen des havarierten Fahrzeuges in den Aufnahmebereich des Behälters über ihre Montage-Schnittstelle mit einer Montage-Schnittstelle des Behälters reversibel lösbar gekoppelt wird. Unter einem reversibel lösbaren Koppeln ist vorliegend eine beliebig oft wiederholbare Montage und Demontage der Zugeinrichtung am Behälter und von dem Behälter zu verstehen.

Gemäß einer Weiterbildung des erfindungsgemäßen Verfahrens umfasst der Schritt des Bereitstellens des Behälters das Bereitstellen, insbesondere das Vereinzeln des Behälters aus einer ersten Anzahl an Behältern, und wobei der Schritt des Bereitstellens der Zugeinrichtung umfasst: Bereitstellen der Zugeinrichtung aus einer zweiten Anzahl an Zugeinrichtungen, wobei die zweite Anzahl an Zugeinrichtungen geringer ist als die erste Anzahl an Behältern. Vorzugsweise umfasst die Anzahl an Behältern mindestens zwei oder mehr Behälter, wohingegen wenigstens eine Zugeinrichtung vorgesehen ist. Vorzugsweise werden drei, vier oder mehr Behälter verwendet, die sich eine einzige Zugeinrichtung teilen. Gemäß einer Ausführung des Verfahrens umfasst das Bereitstellen des Behälters auch, das teilweise Entfernen eines Hakens aus einer Hakenaufnahme am Behälter und das Einsetzen bzw. Koppeln der Zugeinrichtung, insbesondere der Montage-Schnittstelle der Zugeinrichtung, mit der teilweise als Montage-Schnittstelle am Behälter ausgebildeten Hakenaufnahme.

Vorzugsweise erfolgt das Bereitstellen, insbesondere das Vereinzeln des Behälters aus einer Anzahl an Behälter, insbesondere einem Stapel von Behältern, mittels eines Hubgerätes, wie etwa eines Krans. Das Verbringen des Behälters an den Einsatzort wird vorzugsweise mit einem dafür vorgesehenen Transportfahrzeug umgesetzt. Ein solches Transportfahrzeug weist üblicherweise eine Wechselladereinrichtung, Kraneinrichtung, oder Abschleppplattform mit oder ohne Kraneinrichtung auf, mittels der das Transportfahrzeug den Behälter auf eine, ggf. seine, Ladefläche auflädt und/oder am Einsatzort wieder absetzt. Es ist erfindungsgemäß aber auch möglich, den Behälter fix auf dem Fahrzeug oder in Form eines Trailers an dem Fahrzeug anzuordnen. Nachdem das havarierte Fahrzeug in den Aufnahmebereich des Behälters verbracht wurde, wird der Aufnahmebereich, insbesondere die Behälteröffnung am Behälter, durch Verschwenken einer Klappe um eine horizontale Schwenkachse in eine abdichtende Schließstellung am Behälter verschlossen. Nach dem Verschließen des Behälters wird in einer bevorzugten Ausführungsform des erfindungsgemäßen Verfahrens Kühl- bzw. Löschmittel bis zu einem vorbestimmten Füllstand in den Aufnahmebereich eingefüllt. Das Einfüllen des Kühl- bzw. Löschmittels erfolgt über am Behälter angeordnete bzw. vorgesehene Fluid-Anschlüsse. In einer bevorzugten Ausführungsform des Verfahrens wird nach dem Überführen des havarierten Fahrzeuges in den Aufnahmebereich des Behälters das Fahrzeug von der Zugeinrichtung entkoppelt und die Zugeinrichtung über ihre Montage-Schnittstelle von der Montage-Schnittstelle des Behälters demontiert. Ferner kann das im Aufnahmebereich des Behälters befindliche Fahrzeug sofern erforderlich mit entsprechenden Zurrelementen für den Abtransport gesichert werden, sodass das Fahrzeug im Aufnahmebereich sich nicht mehr selbsttätig hin- und herbewegen kann.

Die zum erfindungsgemäßen Behälter beschriebenen Vorteile und bevorzugten Ausführungsformen bzw. Weiterbildungen sind zugleich auch Vorteile und bevorzugte Ausführungsformen der Behälteranordnung sowie des erfindungsgemäßen Verfahrens zum Bergen eines havarierten Fahrzeuges. Zur Zugeinrichtung, der Behälteranordnung und dem erfindungsgemäßen Verfahren beschriebene Vorteile und bevorzugte Ausführungsformen bzw. Weiterbildungen, welche sich auf den Behälter beziehen, sind zugleich auch bevorzugte Ausführungsformen des erfindungsgemäßen Behälters, so dass jeweils zur Vermeidung von Wiederholungen auf die obigen Ausführungen verwiesen wird.

Die Erfindung wird im Folgenden anhand eines bevorzugten Ausführungsbeispiels unter Bezugnahme auf die beigefügten Figuren näher beschrieben. Hierbei zeigen:
- Fig. 1:: eine Ansicht des erfindungsgemäßen Behälters;
- Fig. 2:: eine Detailansicht des erfindungsgemäßen Behälters nach Fig. 1 mit einer montierten Zugeinrichtung;
- Fig. 3:: eine Detailansicht des erfindungsgemäßen Behälters nach Fig. 1 in einer Draufsicht;
- Fig. 4:: eine Seitenansicht des erfindungsgemäßen Behälters nach Fig. 1;
- Fig. 5:: eine Teilansicht des erfindungsgemäßen Behälters nach Fig. 1 in einer weiteren Draufsicht, und
- Fig. 6:: eine Ansicht einer erfindungsgemäßen Behälteranordnung.

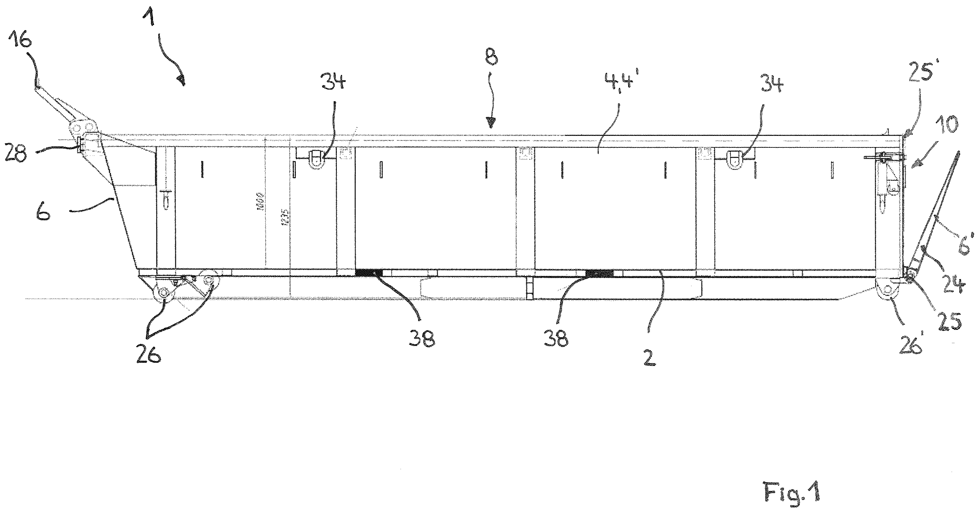

Fig. 1 zeigt einen als Abrollbehälter spezifizierten Behälter 1, der einen Behälterboden 2, zwei sich entlang der Längsseiten des Behälterbodens 2 erstreckende Seitenwände 4, 4' und im Wesentlichen quer zu den Seitenwänden 4, 4' verlaufende Stirnwände 6, 6' aufweist.

Mithilfe des Behälterbodens 2, der Seitenwände 4, 4' und Stirnwände 6, 6' ist ein am Behälter 1 nach oben offener Aufnahmebereich 8 ausgebildet. Die Stirnwand 6 ist eine erste Stirnwand, wobei der ersten Stirnwand 6 gegenüberliegend eine zweite Stirnwand 6' angeordnet ist. Der zweiten Stirnwand 6' ist eine Behälteröffnung 10 zugeordnet.

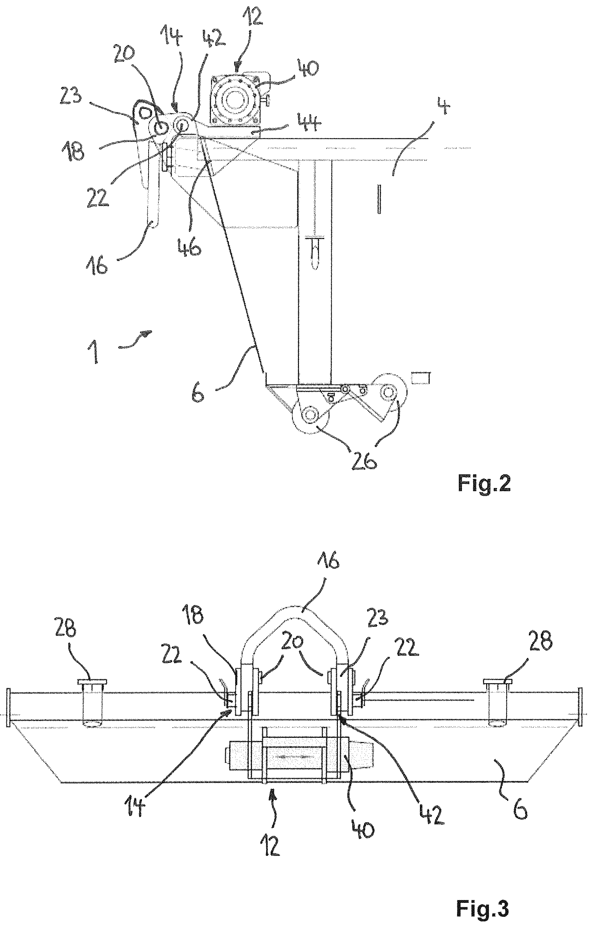

Über die Behälteröffnung 10 können havarierte Fahrzeuge in den Aufnahmebereich 8 verbracht werden. Das Verbringen eines Fahrzeuges in den Aufnahmebereich 8 erfolgt vorzugsweise mittels einer Zugeinrichtung 12 (Fig.2).

Wie ferner in Fig. 1 gezeigt, ist die Stirnwand 6' als horizontal schwenkbar gelagerte Klappe 24 ausgebildet, mittels derer die Behälteröffnung 10 abdichtend verschließbar ist. Zudem sind am Behälterboden 2, insbesondere dessen Unterseite, zwei oder mehr Rollen 26, 26' angeordnet. Das Bezugszeichen 25 verweist auf die Schwenkachse für die konventionelle Klappfunktion der Klappe 24. Ist der Einsatz einer Pendelklappe, oder einer kombinierten pendel- und klappbaren Klappe vorgesehen, weist die Klappe 24 in dem Bereich ihres oberen Endes eine (ggf. weitere) Schwenkachse 25' auf.

Die Rollen 26 im Nahbereich der ersten Stirnwand 6 sind klapp- oder schwenkbar ausgebildet. Die Rollen 26 können zwischen einer Arbeitsstellung und einer Ruhestellung reversibel hin- und herbewegt werden. In einer nicht näher gezeigten Ausführung weist der Behälter 1 eine Abdeckung auf, insbesondere eine Abdeckplane bzw. ein Faltdach, mit dem der nach oben offene Aufnahmebereich 8 verschlossen werden kann.

Die Zugeinrichtung 12 ist mittels einer an der ersten Stirnwand 6 des Behälters 1 vorgesehenen Montage-Schnittstelle 14 mit dieser reversibel koppelbar (Fig. 2). Die Zugeinrichtung 12 kann bedarfsgerecht an der ersten Stirnwand 6, insbesondere an der Montage-Schnittstelle 14 des Behälters 1, beliebig oft montiert und, falls nicht mehr benötigt, wieder demontiert werden. Zudem weist der Behälter 1 einen Haken 16 zum Bewegen des Behälters 1 auf. Mithilfe des Hakens 16 ist das Verladen des Behälters 1 auf einer Ladefläche eines Fahrzeuges bzw. Absetzen des Behälters 1 an einem Einsatzort möglich.

Der Haken 16 ist ebenfalls an der ersten Stirnwand 6 angeordnet. Der Behälter 1 weist eine Hakenaufnahme 18 auf, an welcher der Haken zumindest teilweise reversibel lösbar montiert ist. Der Haken 16 ist als Klapphaken ausgebildet, sodass dieser an der Hakenaufnahme 18 zwischen einer Arbeitsstellung (Fig. 1) und einer Ruhestellung (Fig. 2) hin- und herbewegbar ist. Die Hakenaufnahme 18 weist ein Drehlager 20 auf, um das der Haken 16 schwenkbar angelenkt ist.

Der Haken 16 ist in der Arbeitsstellung (Fig. 1) arretierbar. Das Arretieren des Hakens 16 erfolgt mithilfe eines oder mehrerer Befestigungselemente 22, vorzugsweise einem Bolzen, der oder die ebenfalls reversibel lösbar an der Hakenaufnahme 18 aufgenommen ist/sind. Wie aus Fig. 3 ersichtlich, ist die Montage-Schnittstelle 14 in demselben Abschnitt der Stirnwand 6 angeordnet wie der Haken 16, insbesondere dessen Hakenaufnahme 18.

Wie aus dem in Fig.3 gezeigten Ausführungsbeispiel ersichtlich, ist die Montage-Schnittstelle 14 und die Hakenaufnahme 18 einteilig ausgebildet. Die Montage-Schnittstelle 14 ist Teil der Hakenaufnahme 18. Insbesondere teilen sich der Haken 16 und die Zugeinrichtung 12 den Bereich der Montage-Schnittstelle 14 an der Hakenaufnahme 18. Mittels der Montage-Schnittstelle 14 wird der Haken 16 in seiner Arbeitsstellung (Fig. 1) arretiert.

Befindet sich der Haken 16 in seiner Arbeitsstellung (Fig. 1), werden zwei Plattenteile 23 des Hakens in der Montage-Schnittstelle 14 an der Hakenaufnahme 18 mittels des Befestigungselementes 22 arretiert. Erst mit Überführen des Hakens 16 in seine Ruhestellung (Fig. 2), ist die Montage-Schnittstelle 14 an der Hakenaufnahme 18 zum Aufnehmen der Zugeinrichtung 12 eingerichtet. Das heißt, erst mit Abklappen des Hakens 16 in die Ruhestellung kann die Zugeinrichtung 12 an der Montage-Schnittstelle 14 an der Hakenaufnahme 18 montiert werden. Das Arretieren der Zugeinrichtung 12 an der Montage-Schnittstelle 14 der Hakenaufnahme 18 erfolgt wiederum mittels des Befestigungselementes 22.

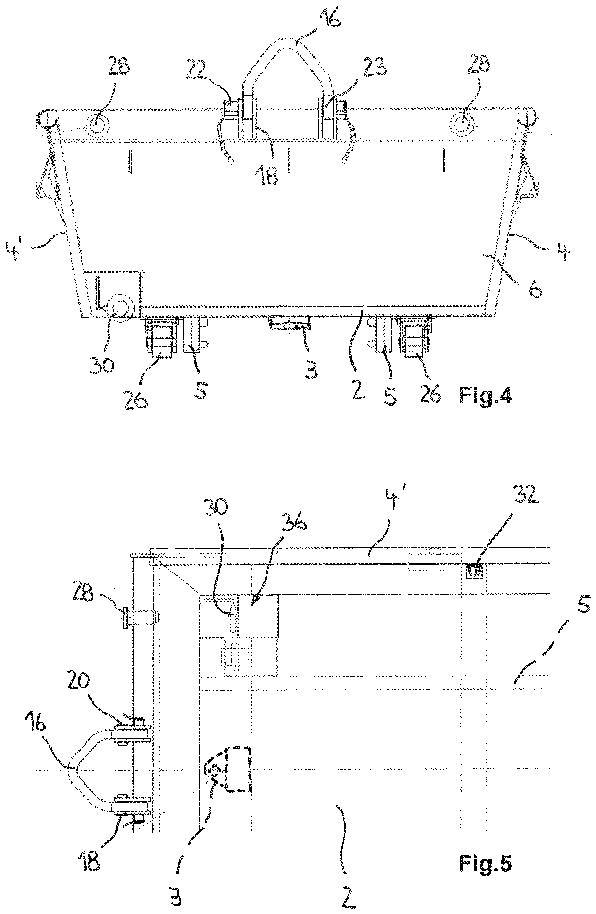

Aus Fig. 4 ist ersichtlich, dass der Behälter 1 an der ersten Stirnseite 6 Anschlüsse 28, 30 zum Einleiten und/oder Abführen von Kühl- bzw. Löschfluid in den Aufnahmebereich 8 aufweist. Sämtliche Anschlüsse 28, 30 weisen vorzugsweise eine Schlauchkupplung, z.B. eine Storz-Kupplung, zum Anschließen eines Anschlusses eines Fluidschlauches auf. In der in Fig. 5 gezeigten Draufsicht auf den Behälter 1 wird ersichtlich, dass an der Innenseite der Seitenwände 4, 4' ein oder mehrere Zurrösen 32 zum Sichern eines innerhalb des Aufnahmebereiches 8 aufgenommenen Fahrzeuges vorgesehen sind.

In einem unteren Bereich des Behälters 1 und im Bereich der ersten Stirnseite 6, vorzugsweise im Bereich des Behälterbodens 2, ist ein Befestigungselement 3 angebracht, beispielsweise in Form einer Öse, eines Hakens oder dergleichen. Das Befestigungselement 3 ist zum Koppeln des Behälters 1 an eine "fremde" Zugeinrichtung, beispielsweise eines Abschlepp- oder Bergefahrzeugs eingerichtet. Dieses Befestigungselement 3 ist vorzugsweise zwischen zwei längs am Behälterboden 2 entlang verlaufenden Unterrahmenelementen 5 des Behälters angeordnet. Der Behälter 1 kann damit auch von Fahrzeugen transportiert werden, die kein eigenes Hakengerät aufweisen.

Zudem weist der Behälter 1, wie ferner aus Fig. 1 ersichtlich, an der Außenseite der Seitenwände 4, 4' Anschlagösen 34 auf, mittels derer der Behälter 1 über eine an einem Fahrzeug angeordnete Kraneinrichtung verladen werden kann. In einem Abschnitt des Behälterbodens 2 sind Staplertaschen 38 ausgebildet, welche von der Längsseite des Behälters 1 aus zugänglich sind.

Zudem ist aus Fig. 5 ersichtlich, dass am Behälterboden 2 ein Auffangbereich 36 vorgesehen ist, der im Vergleich zum übrigen Behälterboden vertieft ausgebildet ist. Der Auffangbereich 36 ist zum Sammeln und Abführen von in den Aufnahmebereich 8 des Behälters 1 eingefülltem Kühl- bzw. Löschfluid eingerichtet.

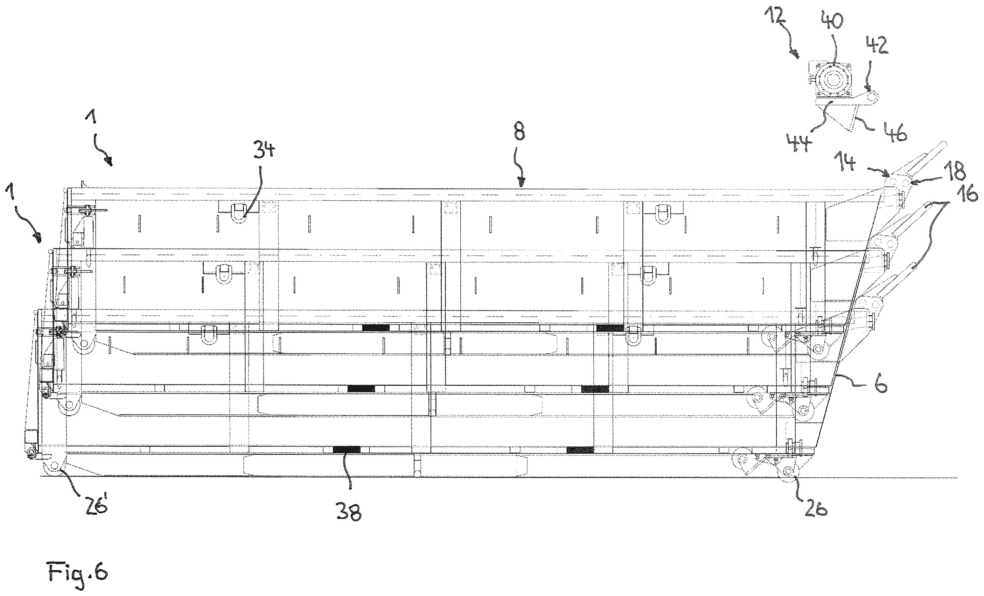

Fig. 6 zeigt eine Anordnung mehrerer ineinander gestapelter Behälter 1 zum Aufnehmen havarierter Fahrzeuge, welche jeweils an ihrer ersten Stirnwand 6 eine erfindungsgemäße Montage-Schnittstelle 14 für eine mit den Behältern 1 koppelbare Zugeinrichtung 12 aufweisen. Die Zugeinrichtung 12 umfasst zumindest eine Antriebseinheit 40 und ein nicht näher gezeigtes, mit der Antriebseinheit wirkverbundenes Zugmittel, wie beispielsweise ein Zugseil oder eine Kette. Die Zugeinrichtung 12 umfasst eine Montage-Schnittstelle 42, welche dazu eingerichtet ist, reversibel lösbar an der korrespondierend ausgebildeten Montage-Schnittstelle 14 an der Hakenaufnahme 18 eines jeweiligen Behälters 1 montiert zu werden. Die Montage-Schnittstelle 42 umfasst einen Grundkörper 44, an dem die Antriebseinheit 40 befestigt ist.

Der Grundkörper 44 dient zum Ausrichten bzw. Positionieren der Zugeinrichtung 12 innerhalb des Aufnahmebereiches 8 des Behälters 1. Der Grundkörper 44 weist wenigstens einen Stützabschnitt 46 auf, der mit der Innenseite der ersten Stirnwand 6 in Anlage gebracht wird. Der Grundkörper 44 wird mittels des oder der Befestigungselemente 22 an der Montage-Schnittstelle 14 der Hakenaufnahme 18 arretiert (Fig. 2).

Gemäß der Erfindung ist es vorgesehen, dass die Anzahl an Behältern größer ist als die entsprechende Anzahl an jeweils zugeordneten Zugeinrichtungen 12. In einer Ausführungsform der Erfindung ist etwa drei Behältern 1 eine Zugeinrichtung 12 zugeordnet.

Wird ein Behälter bzw. werden mehrere Behälter (beispielsweise bei Massenunfällen) benötigt, wird dieser bzw. wird die benötigte Anzahl aus dem in Fig. 6 gezeigten Stapel an Behältern 1 entnommen und zusammen mit der Zugeinrichtung 12 an den entsprechenden Einsatzort transportiert. Es können eine oder mehrere Zugeinrichtungen mitgenommen werden. Die eine oder mehreren Zugeinrichtungen können vorab oder am Einsatzort an den Behälter montiert werden.

Sind in einen Unfall beispielsweise mehrere bergungsbedürftige Elektrofahrzeuge involviert, kann ein Fahrzeug mehrere Bergungsbehälter auf einmal zum Einsatzort bringen und dort situationsadäquat relativ zu den havarierten Fahrzeugen positionieren. Es können dann nacheinander mit der oder den mitgeführten Zugeinrichtungen die Fahrzeuge in die Behälter eingeführt werden und abtransportiert werden oder zunächst ohne Kontaminationsrisiko für die Umwelt gekühlt und/oder gelöscht werden, und später abtransportiert werden.

Gleiche oder ähnliche Bauteile sind mit denselben Bezugszahlen bezeichnet.

### Bezugszeichenliste:

- 1: Behälter
- 2: Behälterboden
- 3: Befestigungselement
- 4, 4': Seitenwand
- 5: Unterrahmenelement
- 6, 6': Stirnwand
- 8: Aufnahmebereich
- 10: Behälteröffnung
- 12: Zugeinrichtung
- 14: Montage-Schnittstelle
- 16: Haken
- 18: Hakenaufnahme
- 20: Drehlager
- 22: Befestigungselement
- 23: Plattenteile
- 24: Klappe
- 26, 26': Rollen
- 28, 30: Anschlüsse
- 32: Zurrösen
- 34: Anschlagöse
- 36: Auffangbereich
- 38: Staplertaschen
- 40: Antriebseinheit
- 42: Montage-Schnittstelle
- 44: Grundkörper
- 46: Stützabschnitt

## Patentansprüche

1. Behälter (1), insbesondere Stapelbehälter, zum Aufnehmen havarierter Fahrzeuge, mit
einem Aufnahmebereich (8) für das Fahrzeug, und
wenigstens einer den Aufnahmebereich (8) begrenzenden Stirnwand (6),
wobei an der Stirnwand (6) eine Montage-Schnittstelle (14) angeordnet ist, und eine Zugeinrichtung (12), welche eine Montage-Schnittstelle (42) aufweist, die korrespondierend zur Montage-Schnittstelle (14) am Behälter (1) ausgebildet ist, zum Verbringen des Fahrzeuges in den Behälter (1) reversibel lösbar mit der Montage-Schnittstelle (14) gekoppelt ist,
wobei der Behälter (1) ferner einen Haken (16) zum Bewegen des Behälters aufweist, der in einem Abschnitt der Stirnwand (6) angeordnet ist, und wobei die Montage-Schnittstelle (14) für die Zugeinrichtung (12) in demselben Abschnitt der Stirnwand (6) angeordnet ist,
**dadurch gekennzeichnet, dass** der Behälter eine Hakenaufnahme (18) aufweist, an welcher der Haken (16) reversibel lösbar montiert ist, und die an der Stirnwand (6) angeordnete Montage-Schnittstelle (14) Teil
der Hakenaufnahme (18) ist, und
wobei der Haken (16) als Klapphaken ausgebildet ist, wobei der Haken (16) an der Hakenaufnahme (18) zwischen einer Arbeitsstellung und einer Ruhestellung hin- und her bewegbar und zumindest in der Arbeitsstellung arretierbar ist, wobei die an der Stirnwand (6) angeordnete Montage-Schnittstelle (14) dazu eingerichtet ist, den Haken (16) zu arretieren, wenn sich der Haken in der Arbeitsstellung befindet, und dazu eingerichtet ist, die Zugeinrichtung (12) aufzunehmen, wenn sich der Haken in der Ruhestellung befindet.

2. Behälter nach Anspruch 1,
**dadurch gekennzeichnet, dass** die Stirnwand (6) eine erste Stirnwand ist, und der Behälter (1) eine der ersten Stirnwand (6) gegenüberliegend angeordnete zweite Stirnwand (6') aufweist, wobei der zweiten Stirnwand (6') eine Behälteröffnung (10) zugeordnet ist.

3. Behälter nach Anspruch 1 oder 2,
**dadurch gekennzeichnet, dass** die an der Stirnwand (6) angeordnete Montage-Schnittstelle (14) einstückig mit der Hakenaufnahme (18) ausgebildet ist.

4. Behälter nach einem der vorstehenden Ansprüche,
**dadurch gekennzeichnet, dass** an dem Behälter (1) eine Anzahl von Anschlüssen (28, 30) zum Einleiten und/oder Abführen von Kühl- bzw. Löschfluid in den Aufnahmebereich (8) angeordnet sind, wobei vorzugsweise einer, mehrere oder sämtliche der Anschlüsse (28, 30) eine Schlauchkupplung, vorzugsweise Storz-Kupplung, zum Anschließen eines Anschlusses eines Fluidschlauches aufweist.

5. Behälter nach einem der vorstehenden Ansprüche,
**dadurch gekennzeichnet, dass** der Behälterboden (2) einen im Vergleich zum übrigen Behälterboden vertieft ausgebildeten Auffangbereich (36) zum Sammeln und Abführen von in den Aufnahmebereich (8) eingeführten Kühl-bzw. Löschfluid aufweist.

6. Behälter nach einem der vorstehenden Ansprüche,
**dadurch gekennzeichnet, dass** der Behälter (1) an seiner Behälterunterseite zwei oder mehr Rollen (26, 26') zum Bewegen des Behälters (1) aufweist, wobei die Rollen (26, 26') vorzugsweise klapp- oder schwenkbar an der Behälterunterseite ausgebildet und zwischen einer Arbeitsstellung und einer Ruhestellung reversibel hin und her bewegbar sind.

7. Behälter nach einem der vorstehenden Ansprüche,
**gekennzeichnet durch** wenigstens eine Abdeckung, welche dazu eingerichtet ist, den Aufnahmebereich (8) am Behälter (1) entlang der Oberseite des Behälters zumindest abschnittsweise zu verschließen.

8. Behälteranordnung, mit
einer ersten Anzahl von Behältern (1), insbesondere Stapelbehältern, zum Aufnehmen havarierter Fahrzeuge, jeweils mit einem Aufnahmebereich (8) für das Fahrzeug, und wenigstens einer den Aufnahmebereich (8) begrenzenden Stirnwand (6), wobei an den Stirnwänden der Behälter (1) jeweils eine Montage-Schnittstelle (14) zum reversibel lösbaren Koppeln mit einer Zugeinrichtung (12) zum Verbringen des Fahrzeuges in den Behälter (1) angeordnet ist, und
einer zweiten Anzahl von Zugeinrichtungen (12) zum Verbringen des Fahrzeuges in den Behälter (1) mit einer Montage-Schnittstelle (42), die zu der Montage-Schnittstelle (14) korrespondierend ausgebildet und dazu eingerichtet ist, reversibel lösbar an der Montage-Schnittstelle (14) montiert zu werden, und
wobei die zweite Anzahl geringer ist als die erste Anzahl, und
wobei die Behälteranordnung mehrere Behälter (1) nach einem der Ansprüche 1 bis 7 aufweist.

9. Verfahren zum Bergen eines havarierten Fahrzeuges unter Verwendung eines stapelbaren Behälters (1) nach einem der Ansprüche 1 bis 7:
Bereitstellen eines Behälters (1) mit einer Montage-Schnittstelle (14) für eine Zugeinrichtung (12),
Bereitstellen einer Zugeinrichtung (12), die eine zu der Montage-Schnittstelle (14) des Behälters (1) korrespondierende Montage-Schnittstelle (42) aufweist,
Koppeln der Zugeinrichtung (12) mit dem Behälter (1) mittels der jeweiligen Montage-Schnittstellen (14, 42),
Verbringen des havarierten Fahrzeuges in einen Aufnahmebereich (8) des Behälters (1) mittels der Zugeinrichtung (12), und
Verschließen des Aufnahmebereiches (8), sowie vorzugsweise Einfüllen von Kühl-bzw. Löschmittel, insbesondere Löschwasser, in den Aufnahmebereich (8).

10. Verfahren nach Anspruch 9,
wobei der Schritt des Bereitstellens des Behälters (1) umfasst: Bereitstellen des Behälters aus einer ersten Anzahl an Behältern, und
wobei der Schritt des Bereitstellens der Zugeinrichtung (12) umfasst: Bereitstellen der Zugeinrichtung aus einer zweiten Anzahl an Zugeinrichtungen, wobei die zweite Anzahl geringer ist als die erste Anzahl.

## Claims

1. Container (1), in particular a stacking container, for receiving damaged vehicles, comprising a receiving area (8) for the vehicle, and at least one end wall (6) delimiting the receiving area (8), wherein a mounting interface (14) is arranged on the end wall (6), and a traction device (12), which has a mounting interface (42) formed correspondingly to the mounting interface (14) on the container (1), is reversibly detachably coupled to the mounting interface (14) for transferring the vehicle into the container (1), wherein the container (1) further comprises a hook (16) for moving the container, which is arranged in a portion of the end wall (6), and wherein the mounting interface (14) for the traction device (12) is arranged in the same portion of the end wall (6), **characterized in that** the container comprises a hook mount (18) on which the hook (16) is reversibly detachably mounted, and the mounting interface (14) arranged on the end wall (6) is part of the hook mount (18), and wherein the hook (16) is designed as a folding hook, wherein the hook (16) is movable back and forth on the hook mount (18) between a working position and a rest position and is lockable at least in the working position, wherein the mounting interface (14) arranged on the end wall (6) is configured to lock the hook (16) when the hook is in the working position, and is configured to receive the traction device (12) when the hook is in the rest position.

2. Container according to claim 1, **characterized in that** the end wall (6) is a first end wall, and the container (1) comprises a second end wall (6') arranged opposite the first end wall (6), wherein a container opening (10) is assigned to the second end wall (6').

3. Container according to claim 1 or 2, **characterized in that** the mounting interface (14) arranged on the end wall (6) is formed in one piece with the hook mount (18).

4. Container according to any one of the preceding claims, **characterized in that** a number of connections (28, 30) for introducing and/or discharging cooling or extinguishing fluid into the receiving area (8) are arranged on the container (1), wherein preferably one, several or all of the connections (28, 30) comprise a hose coupling, preferably a Storz coupling, for connecting a connector of a fluid hose.

5. Container according to any one of the preceding claims, **characterized in that** the container floor (2) comprises a collecting area (36), which is recessed in comparison to the remaining container floor, for collecting and discharging cooling or extinguishing fluid introduced into the receiving area (8).

6. Container according to any one of the preceding claims, **characterized in that** the container (1) comprises, on its container underside, two or more rollers (26, 26') for moving the container (1), wherein the rollers (26, 26') are preferably designed to be foldable or pivotable on the container underside and are reversibly movable back and forth between a working position and a rest position.

7. Container according to any one of the preceding claims, **characterized by** at least one cover which is configured to close the receiving area (8) on the container (1) at least in sections along the top side of the container.

8. Container arrangement, comprising a first number of containers (1), in particular stacking containers, for receiving damaged vehicles, each having a receiving area (8) for the vehicle, and at least one end wall (6) delimiting the receiving area (8), wherein a mounting interface (14) for reversibly detachably coupling with a traction device (12) for transferring the vehicle into the container (1) is arranged on the end walls of the containers (1), respectively, and a second number of traction devices (12) for transferring the vehicle into the container (1), each having a mounting interface (42) which is formed correspondingly to the mounting interface (14) and is configured to be reversibly detachably mounted on the mounting interface (14), and wherein the second number is smaller than the first number, and wherein the container arrangement comprises a plurality of containers (1) according to any one of claims 1 to 7.

9. Method for recovering a damaged vehicle using a stackable container (1) according to any one of claims 1 to 7, comprising: providing a container (1) having a mounting interface (14) for a traction device (12), providing a traction device (12) having a mounting interface (42) corresponding to the mounting interface (14) of the container (1), coupling the traction device (12) to the container (1) by means of the respective mounting interfaces (14, 42), transferring the damaged vehicle into a receiving area (8) of the container (1) by means of the traction device (12), and closing the receiving area (8), and preferably filling cooling or extinguishing agent, in particular extinguishing water, into the receiving area (8).

10. Method according to claim 9, wherein the step of providing the container (1) comprises: providing the container from a first number of containers, and wherein the step of providing the traction device (12) comprises: providing the traction device from a second number of traction devices, wherein the second number is smaller than the first number.

## Revendications

1. Conteneur (1), en particulier conteneur empilable, pour recevoir des véhicules accidentés, avec
une zone de réception (8) pour le véhicule, et
au moins une paroi frontale (6) délimitant la zone de réception (8),
dans lequel une interface de montage (14) est disposée sur la paroi frontale (6), et un treuil (12), qui présente une interface de montage (42), qui est réalisée en correspondance avec l'interface de montage (14) sur le conteneur (1), est couplé de manière détachable de façon réversible avec l'interface de montage (14) pour l'amenée du véhicule dans le conteneur (1),
dans lequel le conteneur (1) présente en outre un crochet (16) pour déplacer le conteneur, qui est disposé dans une section de la paroi frontale (6), et dans lequel l'interface de montage (14) pour le treuil (12) est disposée dans la même section de la paroi frontale (6), **caractérisé en ce que** le conteneur présente un logement de crochet (18) sur lequel le crochet (16) est monté de manière détachable de façon réversible, et l'interface de montage (14) disposée sur la paroi frontale (6) fait partie du logement de crochet (18), et
dans lequel le crochet (16) est réalisé en tant que crochet rabattable, dans lequel le crochet (16) peut être animé d'un mouvement de va-et-vient sur le logement de crochet (18) entre une position de travail et une position de repos et peut être bloqué au moins dans la position de travail, dans lequel l'interface de montage (14) disposée sur la paroi frontale (6) est configurée pour bloquer le crochet (16) lorsque le crochet se trouve dans la position de travail, et est configurée pour recevoir le treuil (12) lorsque le crochet se trouve dans la position de repos.

2. Conteneur selon la revendication 1,
**caractérisé en ce que** la paroi frontale (6) est une première paroi frontale, et le conteneur (1) présente une seconde paroi frontale (6') disposée en vis-à-vis de la première paroi frontale (6), dans lequel une ouverture de conteneur (10) est associée à la seconde paroi frontale (6').

3. Conteneur selon la revendication 1 ou 2,
**caractérisé en ce que** l'interface de montage (14) disposée sur la paroi frontale (6) est réalisée d'une seule pièce avec le logement de crochet (18).

4. Conteneur selon l'une quelconque des revendications précédentes,
**caractérisé en ce qu'**un certain nombre de raccordements (28, 30) pour l'introduction et/ou l'évacuation de fluide de refroidissement ou d'extinction dans la zone de réception (8) sont disposés sur le conteneur (1), dans lequel un, plusieurs ou tous les raccordements (28, 30) présentent de préférence un raccord de tuyau, de préférence un raccord Storz, pour raccorder un raccordement d'un tuyau de fluide.

5. Conteneur selon l'une quelconque des revendications précédentes,
**caractérisé en ce que** le fond de conteneur (2) présente une zone de rétention (36) réalisée plus profondément que le reste du fond de conteneur pour la collecte et l'évacuation de fluide de refroidissement ou d'extinction introduit dans la zone de réception (8).

6. Conteneur selon l'une quelconque des revendications précédentes,
**caractérisé en ce que** le conteneur (1) présente, sur sa face inférieure de conteneur, deux rouleaux (26, 26') ou plus pour déplacer le conteneur (1), dans lequel les rouleaux (26, 26') sont de préférence réalisés de manière rabattable ou pivotante sur la face inférieure de conteneur et peuvent être animés d'un mouvement de va-et-vient entre une position de travail et une position de repos de façon réversible.

7. Conteneur selon l'une quelconque des revendications précédentes,
**caractérisé par** au moins un couvercle, qui est configuré pour fermer la zone de réception (8) sur le conteneur (1) le long de la face supérieure du conteneur au moins sur certaines sections.

8. Ensemble de conteneurs, avec
un premier nombre de conteneurs (1), en particulier de conteneurs empilables, pour recevoir des véhicules accidentés, chacun avec une zone de réception (8) pour le véhicule, et au moins une paroi frontale (6) délimitant la zone de réception (8), dans lequel respectivement une interface de montage (14), pour le couplage libérable de façon réversible avec un treuil (12) pour l'amenée du véhicule dans le conteneur (1), est disposée sur les parois frontales des conteneurs (1), et
un second nombre de treuils (12) pour amener le véhicule dans le conteneur (1) avec une interface de montage (42) qui est réalisée en correspondance avec l'interface de montage (14) et configurée pour être montée de manière détachable de façon réversible sur l'interface de montage (14), et
dans lequel le second nombre est inférieur au premier nombre, et
dans lequel l'ensemble de conteneurs présente plusieurs conteneurs (1) selon l'une quelconque des revendications 1 à 7.

9. Procédé de récupération d'un véhicule accidenté en utilisant un conteneur (1) empilable selon l'une quelconque des revendications 1 à 7 :
mise à disposition d'un conteneur (1) avec une interface de montage (14) pour un treuil (12),
mise à disposition d'un treuil (12) qui présente une interface de montage (42) correspondant à l'interface de montage (14) du conteneur (1),
couplage du treuil (12) au conteneur (1) au moyen des interfaces de montage (14, 42) respectives,
amenée du véhicule accidenté dans une zone de réception (8) du conteneur (1) au moyen du treuil (12), et
fermeture de la zone de réception (8), ainsi que, de préférence, versement d'agent réfrigérant ou extincteur, en particulier d'eau d'extinction, dans la zone de réception (8).

10. Procédé selon la revendication 9,
dans lequel l'étape de mise à disposition du conteneur (1) comprend : la mise à disposition du conteneur parmi un premier nombre de conteneurs, et
dans lequel l'étape de mise à disposition du treuil (12) comprend : la mise à disposition du treuil parmi un second nombre de treuils, dans lequel le second nombre est inférieur au premier nombre.
